## Europäisches Patentamt

## European Patent Office

## Office européen des brevets

(19)

(11) Veröffentlichungsnummer: **0 178 627**
**B1**

(12) ## EUROPÄISCHE PATENTSCHRIFT

(45) Veröffentlichungstag der Patentschrift:
17.02.88

(21) Anmeldenummer: 85113042.7

(22) Anmeldetag: 15.10.85

(51) Int. Cl.⁴: **A 47 J 31/06**, B 65 B 29/02,
**B 31 B 1/60**

(54) Verfahren zur Herstellung von Gegenständen aus Filterpapier.

(30) Priorität: 18.10.84 DE 3438213

(43) Veröffentlichungstag der Anmeldung:
23.04.86 Patentblatt 86/17

(45) Bekanntmachung des Hinweises auf die Patenterteilung:
17.02.88 Patentblatt 88/7

(84) Benannte Vertragsstaaten:
AT BE CH DE FR GB LI LU NL SE

(56) Entgegenhaltungen:
EP - A - 0 000 448
DE - A - 3 034 955
DE - A - 3 046 036

(73) Patentinhaber: **Melitta-Werke Bentz & Sohn,
Ringstrasse 99, D-4950 Minden 1 (DE)**

(72) Erfinder: **Schmidt, Heinrich, Ellerburger Strasse 30,
D-4952 Porta-Westfalica (DE)**

(74) Vertreter: **Stracke, Alexander, Dipl.-Ing. et al,
Jöllenbecker Strasse 164, D-4800 Bielefeld 1 (DE)**

ACTORUM AG

**Beschreibung**

Die vorliegende Erfindung bezieht sich auf ein Verfahren zur Herstellung von Gegenständen aus Filterpapier, mit einer aus einer mechanischen Bearbeitung resultierenden Schwachstellenbildung und mit einer Papierverfestigung mit Hilfe eines Nassverfestigers aus vernetzten kationischen Polyalkyleniminen.

Bei der Herstellung der genannten Gegenstände wird bislang der Nassverfestiger während der Filterpapiererzeugung sowohl im Holländer als auch in der Mischbütte zugesetzt, um die Nassfestigkeit des Materials zu erhöhen.

Bei dieser Verfahrensweise erzielt man, bei maximal zulässiger Dosierung, eine Erhöhung der Nassfestigkeit von ca. 30-35% gegenüber dem unbehandelten Filterpapier, wobei ein erhöhter Zusatz von Nassverfestiger zu keiner wesentlichen Steigerung der Nassverfestigung führt, jedoch die Filtrierfähigkeit nachteilig beeinflusst.

Je nach Gestaltungsform der Filterpapiergegenstände werden durch eine mechanische Bearbeitung Schwachstellen erzeugt, z.B. die Rändelung von Filterpapiereinsätzen durch Prägedruck oder der Randbereichsverstärkung und Performierung von Filterpapierbahnen. Der aufzubringende hohe Prägedruck führt dabei nicht nur zu einem grossen Verschleiss des Prägewerkzeuges, sondern insbesondere auch zu einer erheblichen Verquetschung im Nahtbereich und damit einer erheblichen Schwachstellenbildung.

Der vorliegenden Erfindung liegt die Aufgabe zugrunde, ein Verfahren der gattungsgemässen Art zu schaffen, mit dem die Nassfestigkeit im Schwachstellenbereich wesentlich erhöht, der Papiereinsatz vermindert und der Verschleiss des Prägewerkzeuges herabgesetzt werden können.

Die Aufgabe wird erfindungsgemäss dadurch gelöst, dass man nach der Filterpapierherstellung und der mechanischen Bearbeitung auf die Schwachstellenbereiche Nassverfestiger aufträgt und dann zur Aushärtung des Nassverfestigers eine Wärmebehandlung anschliesst.

Es hat sich völlig überraschend gezeigt, dass sich eine überproportionale Erhöhung der Nassfestigkeit um das Zwei- bis Dreifache im Schwachstellenbereich erreichen lässt.

Dabei wird durch das Aufbringen des Nassverfestigers die vom Gesetzgeber vorgeschriebene Dosierungshöhe im Endprodukt nicht überschritten. Nach einer Heissfilterverordnung ist der Gehalt an Nassverfestigungsmitteln auf höchstens 0,5%, bezogen auf den trockenen Faserstoff der Handelsware, zu begrenzen. Nach bisherigen Erkenntnissen ist die überraschende Erhöhung der Nassverfestigung, die sich durch Zusatz eines noch so hohen Prozentsatzes von Nassverfestiger während der Filterpapierherstellung nicht erreichen lässt, darauf zurückzuführen, dass sich der Nassverfestiger an den Fasern des Filterpapiers anlagert, dadurch einen weitgehenden wasserabweisenden Schutz bildet und die Auflösung der Faser-zu-Faser-Bindung bei der Durchnässung, auch in Verbindung mit hohen Temperaturen, z.B. Brühgetränken, verhindert. Durch diesen Effekt ist es sowohl möglich, den Papiereinsatz durch Herabsetzen des Flächengewichtes zu reduzieren, wie auch mit geringerem Prägedruck zu arbeiten.

Dadurch wird einmal der Verschleiss des Werkzeuges gemindert, zum anderen wird die Prägung schwächer ausgeführt, wodurch die Filterpapierfasern weniger beansprucht werden und die Nassfestigkeit zusätzlich erhöht wird.

Der Auftrag des Nassverfestigers kann mit konstruktiv einfachen Mitteln erfolgen. So kann beispielsweise als eine Einheit eines Folgewerkzeuges, eine als Tiefdruckwalze ausgebildete Auftragsvorrichtung, einem als weitere Einheit gestalteten Prägewerkzeug nachgeordnet sein.

Eine Wärmebehandlung des Filterpapiergegenstandes schliesst sich dem Prägen und Auftragen des Nassverfestigers an. Diese kann beispielsweise durch Mikrowellen oder Hochfrequenzerwärmung erfolgen. Dabei wird der mit thermoplastischen Eigenschaften versehene Nassverfestiger ausgehärtet.

Es kann einmal ein zusätzlicher Auftrag des Nassverfestigers auf die Schwachstellenbereiche des Filterpapiergegenstandes, der bei der Filterpapierherstellung mit einem Nassverfestiger versehen wurde, erfolgen. Es kann aber auch ein Auftrag des Nassverfestigers auf die Schwachstellenbereiche des bei der Filterpapierherstellung nicht mit Nassverfestiger versehenen Filterpapiergegenstandes vorgenommen werden.

Weitere bevorzugte Ausgestaltungen der Erfindung sind in den Unteransprüchen gekennzeichnet. Ausführungsbeispiele von Gegenständen aus Filterpapier, hergestellt nach dem erfindungsgemässen Verfahren, werden nachfolgend anhand beigefügter Zeichnungen beschrieben.

Es zeigen:

Fig. 1 einen Filterpapiereinsatz zum Filtern von Kaffeegetränken in perspektivischer Darstellung,

Fig. 2 eine Filterbahn auf einer Vorratsrolle in perspektivischer Darstellung,

Fig. 3 eine Teilansicht einer durch Rändelung gebildeten Nahtstelle eines Filterpapiereinsatzes.

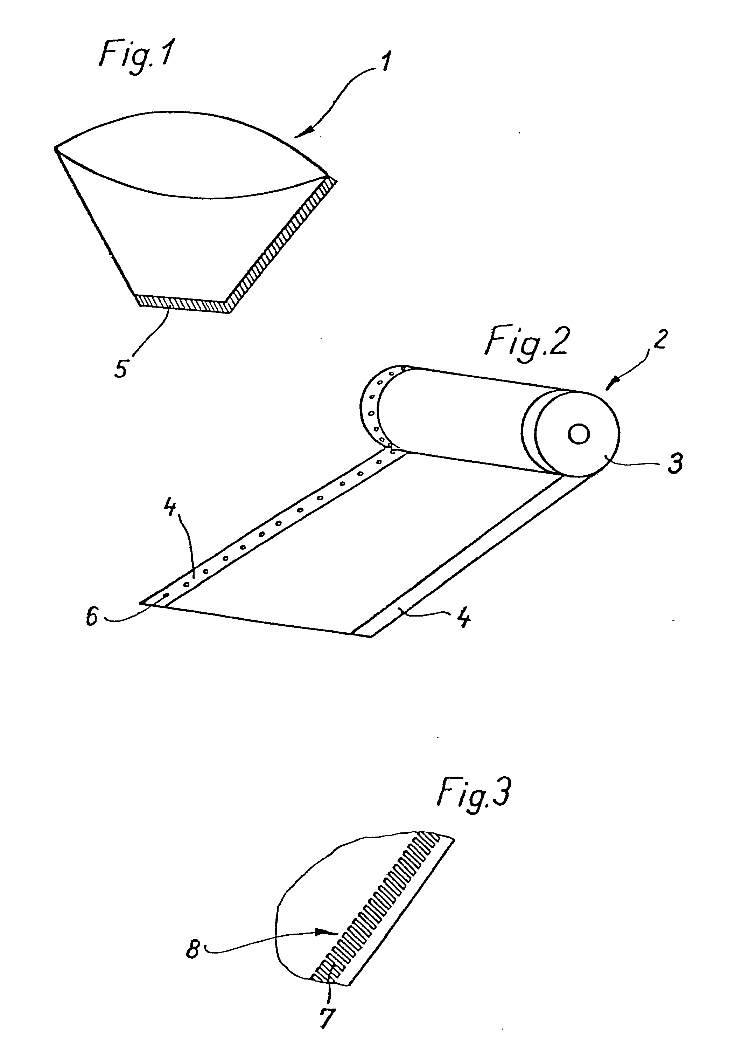

Bei dem in Fig. 1 dargestellten Filterpapiereinsatz 1, der in seiner Abwicklung die Mantelfläche eines kegelstumpfförmigen Körpers aufweist, sind durch Rändelung die Nahtstellen 5 gebildet. Diese bilden bei dem Filterpapiereinsatz 1 die Schwachstellenbereiche, die besonders stark beim Brühvorgang, auch durch das relativ hohe Gewicht des feuchten Kaffeemehls, beansprucht werden.

Das Auftragen des Nassverfestigers auf die Nahtstellen 5 des Filterpapiereinsatzes 1 kann auf verschiedene Weise erfolgen. So ist es z.B. denkbar, den Auftrag manuell vorzunehmen. Zweckmässig ist jedoch, da es sich bei dem Filterpapiereinsatz 1 um einen Massenartikel handelt, den Auftrag des Nassverfestigers im Rahmen des vorhandenen Herstellungsablaufes mit zu automatisieren.

Eine in Fig. 2 gezeigte Filterbahn 2 weist zur Randbereichsverstärkung mit Nassverfestiger behandelte Randzonen auf. Zur automatischen Abwicklung der Filterbahn 2 von einer Vorratsrolle 3 befindet sich in dem einen Randbereich 4 eine Transportperforation 6.

Eine zusätzliche Schwächung ist durch die Transportperforation 6 gegeben, so dass eine Erhöhung der Nassverfestigung in den Randbereichen 4 zu einem störungsfreien Betrieb beim Einsatz der Filterbahn 3 in Grosskaffeemaschinen führt.

Eine in der Fig. 3 dargestellte, durch Prägedruck gebildete Rändelung 7 zeigt, dass eine Verquetschung der Filterpapierfaser im Nahtbereich 8 und kurz davor erfolgt. Durch das Auftragen des Nassverfestigers auf den Filterpapiereinsatz im Nahtbereich 8 kann man den Prägedruck verringern und damit die Verquetschung herabsetzen.

**Patentansprüche**

1. Verfahren zur Herstellung von Gegenständen aus Papier, mit einer aus einer mechanischen Bearbeitung resultierenden Schwachstellenbildung und mit einer Papierverfestigung mit Hilfe eines Nassverfestigers aus vernetzten, kationischen Polyalkyleniminen, dadurch gekennzeichnet, dass man nach der Filterpapierherstellung und der mechanischen Bearbeitung auf die Schwachstellenbereiche Nassverfestiger aufträgt und dann zur Aushärtung des Nassverfestigers eine Wärmebehandlung anschliesst.

2. Verfahren nach Anspruch 1, dadurch gekennzeichnet, dass vor dem Auftragen des Nassverfestigers ein Prägedruck erfolgt.

3. Verfahren nach Anspruch 1, dadurch gekennzeichnet, dass eine Mikrowellenwärmebehandlung erfolgt.

4. Verfahren nach Anspruch 1, dadurch gekennzeichnet, dass eine Hochfrequenzwärmebehandlung erfolgt.

**Claims**

1. Method for the manufacture of articles of paper with a weak spot formation resulting from a mechanical processing and with a paper-strengthening with the aid of a wet strengthener of crosslinked cationic polyalkylenimines, characterised thereby, that after the filter paper manufacture and the mechanical processing, one applies wet strengthener onto the weak spot regions and then follows with a heat treatment for the setting of the wet strengthener.

2. Method according to claim 1, characterised thereby, that a relief printing takes place before the application of the wet strengthener.

3. Method according to claim 1, characterised thereby, that a microwave heat treatment takes place.

4. Method according to claim 1, characterised thereby, that a high frequency heat treatment takes place.

**Revendications**

1. Procédé pour la fabrication d'objets en papier comportant une formation de points faibles résultant d'un façonnage mécanique, et comportant un renforcement du papier à l'aide d'un agent de résistance à l'état humide, à base de polyalkylénimines cationiques réticulées, caractérisé en ce que l'on applique un agent de résistance à l'état humide sur les zones de points faibles après la fabrication du papier filtre et le façonnage mécanique, et on effectue ensuite un traitement thermique pour le durcissement de l'agent de résistance à l'état humide.

2. Procédé selon la revendication 1, caractérisé en ce que l'on effectue un gaufrage avant l'application de l'agent de résistance à l'état humide.

3. Procédé selon la revendication 1, caractérisé en ce que l'on effectue un traitement thermique au moyen d'un rayonnement micro-onde.

4. Procédé selon la revendication 1, caractérisé en ce que l'on effectue un traitement thermique au moyen d'un rayonnement à haute fréquence.

*Fig.1*

*Fig.2*

*Fig.3*